# EUROPEAN PATENT SPECIFICATION

(11) **EP 1 392 066 B1**
(45) Date of publication and mention of the grant of the patent: **14.03.2012**
(21) Application number: 02708148.8
(22) Date of filing: 08.04.2002
(51) Int. Cl.: H04W 8/08

(54) **A METHOD FOR IMPLEMENTING SPEECH CHANNEL EXCHANGE IN THE CALL SUCCESSION OF THE MOBILE COMMUNICATION SYSTEM**
VERFAHREN ZUR IMPLEMENTIERUNG DES SPRACHKANALAUSTAUSCHS BEI DER VERBINDUNGSSUKZESSION DES MOBILKOMMUNIKATIONSSYSTEMS
PROCEDE POUR METTRE EN OEUVRE UN ECHANGE DE VOIES DE CONVERSATION LORS DE L'ETABLISSEMENT D'APPELS DANS UN SYSTEME DE COMMUNICATION MOBILE

(30) Priority: 30.05.2001 CN 01113018
(43) Date of publication of application: 25.02.2004
(73) Proprietor: Huawei Technologies Co., Ltd., Shenzhen, Guangdong 518057 (CN)
(72) Inventor: YANG, Ganghua, Huawei Service Centre Building, District, Shenzhen, Guangdong 518057 (CN)
(74) Representative: Körber, Martin Hans
(86) International application number: PCT/CN2002/000240
(87) International publication number: WO 2002/098150

(56) References cited:
- EP-A2- 0 797 319
- WO-A-00/38439
- WO-A2-95/24789
- CN-A- 1 245 000
- DE-A1- 19 812 916
- GB-A- 2 334 179
- GB-A- 2 334 180
- US-A- 5 260 987
- US-A- 5 761 195
- US-B1- 6 198 921
- US-B1- 6 198 929

## Description

### Field of the Technology

The invention relates to a mobile communication system, more particularly, it relates to a method for implementing voice channel switching by a Base Station Controller (BSC) during the calling proceeding in a mobile communication system.

### Background of the Invention

In the prior mobile communication systems, such as Global System for Mobile Communication (GSM), Code Division Multiple Access (CDMA) system, Wideband Code Division Multiple Access (WCDMA) system and Code Division Multiple Access 2000 (CDMA2000) system, the voice channel switching during the calling proceeding is implemented by the mobile exchanges, such as Mobile Switching Center (MSC) in GSM system, Core Network (CN) in WCDMA system and MSC in CDMA2000 system. Even if a calling Mobile Station (MS) and a called MS are located in the coverage areas of the Base Transceiver Stations (BTSs) managed by the same base station controller, such as BSC in GSM system, Radio Network Controller (RNC) in WCDMA system, and BSC in CDMA2000 system, mobile exchanges are still required for implementing the voice channel switching.

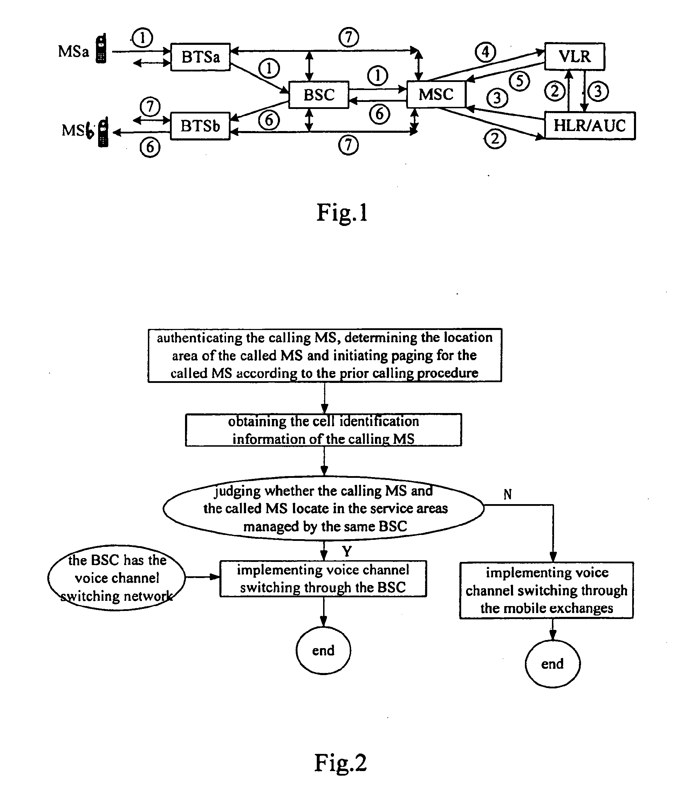

As shown in Figure 1, the mobile calling proceeding in the coverage areas of BTSs managed by the same BSC in the GSM system comprises the following steps.
1) A Mobile Subscriber ISDN Number (MSISDN) is transmitted by Mobile Station a (MSa) to the MSC via Base Transceiver Station a (BTSa) and the BSC, thus the procedures including channel request, service request, authentication request and channel assignment are implemented.
2) A request is sent by MSC to a Host Location Register/Authentication Center (HLR/AUC) to retrieve a Mobile Station Roaming Number (MSRN);
3) The MSRN is provided by Visit Location Register (VLR), and returned back to the MSC;
4) After analyzing MSRN by MSC to know the called party is a local user, a Store and Forward Information of Calling (S. F. I. C.) is transmitted to VLR;
5) A paging request is sent by VLR to MSC;
6) A paging request is sent by MSC to BSC and BTSb, and MSb is found;
7) The voice channel switching is implemented in MSC.

The above voice channel switching during the calling proceeding is implemented in MSC. The roundabout voice paths from BTS to BSC and from BSC to MSC are introduced, and unnecessary data flow and transmission delay between subsystems are increased. Particularly, in some transmission systems, such as satellite transmission system, more delay and error codes are introduced therein. The delay of dual skips is about 540ms, thereby the rental of the transmission links may be increased.

An object of the invention is to provide a method for implementing voice channel switching during the calling proceeding in a mobile communication system. With this method, the roundabout voice paths can be reduced, the data flow and transmission delay between subsystems of the mobile system can be decreased, and the rental of the transmission links can be saved.

GB 2334180 discloses a method for routing in a radio communication system with a plurality of radio units for communication with mobile terminals, each radio unit connected to one out of a plurality of controller units, each controller unit connected to one out of more switches, and one or more points of interworking for communication with fixed terminals. According to GB 2334180, a connection between a first unit of said plurality of radio units and a second unit of said plurality of radio units is established. If a call is between a first terminal associated with said first unit and a second terminal associated with said second unit, routing said call via said connection. US 5260987 discloses a base station controller for insertion between the A bits and A interfaces of a GSM/PCN mobile communications network, which BSC is in use associated with a local calls between mobile subscribers associated with the BSC and the local PSTN whilst preserving the interface. GB2334179 relates to a method of controlling communication between mobile stations and WO9524789 discloses a call control method in a mobile communication system.

### Summary of the Invention

In order to accomplish the above object, a method for implementing voice channel switching during calling proceeding in a mobile communication system according to the invention comprises the steps of:
adding a switching network in a base station controllers;
initiating, by a calling mobile station, a call to a called mobile station;
authenticating, by the mobile communication system, the calling mobile station, and determining location area of the called mobile station;
obtaining a cell identification number table listing the Base Transceiver Stations BTSs managed by a same base station controller, and
judging whether both a first BTS corresponding to the calling mobile station and a second BTS corresponding to the called mobile station are managed by a same base station controller according to the cell identification number table, a cell identification number of the called mobile station and a cell identification number of the calling mobile station; wherein
if both the first BTS and the second BTS are managed by the base station controller, implementing a voice channel connection through the switching network added in the base station controller; and
if the first BTS and the second BTS are managed by different base station controllers, implementing the voice channel connection through a mobile exchange, wherein the mobile exchange manages the base station controller.

In the above-mentioned method, when the mobile communication system is a GSM system, the cell identification number of the calling mobile station is carried in a message sent by the calling mobile station, and an MSC or base station controller judges whether both the first BTS and the second BTS are managed by the base station controller.

In the above-mentioned method, a transmission system supporting mesh topology structure can be used as an interface between the BTSs and the base station controller in said GSM system, and the base station controller has a structure supporting said interface to employ complete mesh topology transmission.

In the above-mentioned method, when the mobile communication system is a WCDMA, system, the cell identification number of the calling mobile station is carried in a message sent by the calling mobile station, and the core switching network or the RNC determines whether both the first BTS and the second BTS are managed by the same base station controller

In the above-mentioned method, the mobile communication system is a GSM network, and the cell identification number of the called mobile station is obtained from a VLR.

In this invention, after implementing the prior normal call procedures, whether the calling party and the called party locate in the coverage areas of the BTSs managed by the same base station controller is determined. If the calling party and the called party locate in the coverage areas of the BTSs managed by the same base station controller, the voice channel switching is implemented by the switching network added in the base station controller. In this way, on one hand, the roundabout voice paths and the data flow between the subsystems of the mobile communication systems can be reduced, thereby the rental for transmission is reduced. Particularly, it is more significant for the systems with large data flow, such as WCDMA, CDMA2000, and the like; on the other hand, the delay and affection to the voice quality caused by the unnecessary transmission are reduced. The voice channel switching for both the calling party and the called party belonging to the same base station controller is implemented in the base station controller via the transmission systems (such as the complete mesh topology network of the satellite transmission) which supports the mesh topology structure, the unnecessary dual-skip delay is prevented, and the transmission links are saved.

### Brief Description of the Drawings

Figure 1 is a schematic diagram illustrating flow of calling between mobile stations under the same BSC in the prior GSM system.
Figure 2 is a schematic diagram illustrating the flow of the invention.
Figure 3 is a schematic diagram illustrating the flow of the invention applied in GSM system.
Figure 4 is a schematic diagram illustrating the GSM system according to the invention in which the change from dual-skip mode to single-skip mode of the satellite transmission is employed between BTS and BCS.
Figure 5 is a schematic diagram illustrating the flow of the invention applied in WCDMA system.

### Detailed Description of the Invention

With reference to Figure 2, a method for implementing voice channel switching during calling proceeding in a mobile communication system according to the invention comprises the steps of:
a. adding switching networks in base station controllers;
b. authenticating the calling mobile station, determining the location area of the called mobile station and initiating paging for the called mobile station by the mobile communication system;
c. obtaining the information of the coverage area of the BTS corresponding to the calling mobile station and that of the BTS corresponding to the called mobile station, and determining whether the calling party and the called party locate in the coverage areas of the BTSs managed by the same base station controller; and
d. if the calling party and the called party locate in the coverage areas of the BTSs managed by the same base station controller, implementing voice channel connection through the switching network added in the base station controller; or
e. if the calling party and the called party locate in the coverage areas of the BTSs managed by different base station controllers, implementing the voice channel connection through mobile exchanges.

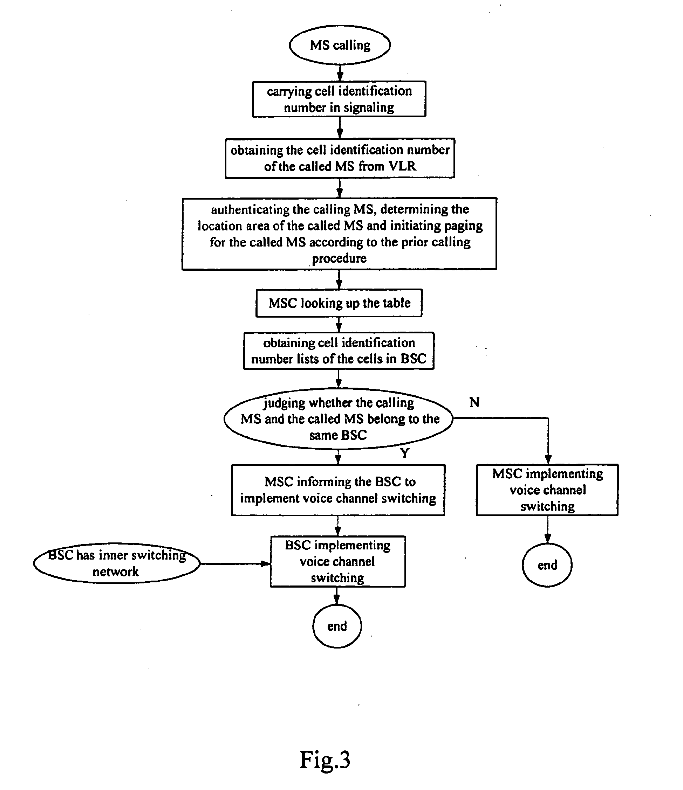

With reference to Figure 3 again, when the above mobile communication system is GSM system, the messages sent by the calling MS includes the cell identification number of the calling party. In such a case, whether the calling party and the called party locate in the coverage areas of the BTSs managed by the same BSC is determined by MSC or the BSC. Meanwhile, the BSC involves the switching network supporting voice channel switching function.

In detail, the method comprises the steps as follows.

### 1. The cell identification numbers of both the calling MS and the called MS are obtained.

The coverage area of BTS is determined by the cell identification number. For a BS in all directions, there is only one cell, which corresponds to a cell identification number. In contrast, a directional BS has multiple cells, which correspond to a plurality of cell identification numbers, based on the different quantities of the sectors.

BSC supports control for a plurality of BTSs. In the management station of BSC, there are cell identification number tables for all BTSs managed by the present BSC.

In the flow procedure of the calling proceeding, the cell where the called MS is located is determined based on the cell identification number of BTS coverage area where the called MS is located which is obtained from VLR.

The cell identification number of the called MS can be obtained in the prior calling procedure.

The cell identification number of the calling MS can be obtained from the cell identification number information involved in the messages transmitted from the MS to the base station system.

### 2. Whether the calling MS and the called MS are located at the same BSC service region is determined by MSC or BSC.

After the authentication for the calling MS, the determination of the location area of the called MS and initiating paging to the called MS have been completed, a corresponding cell identification number table of BSC in the digital management station of BSC is checked by MSC. In this way, whether the current cell identification numbers of the calling MS and the called MS belong to the same BSC is determined, thereby whether BTS service regions where the calling MS and the called MS are located belong to the same BSC is determined, namely, whether the calling MS and the called MS are located at the same BSC service region is determined.

In order to reduce the impact for the prior network, the above function can be realized in BSC also.

### 3. BSC can support inner voice channel switching function.

BSC includes switching network supporting voice channel switching function, such as a time switcher or a space switcher. The structure and the capacity of the switching network are determined based on the statistic result showing the possibility that the calling MS and the called MS are located at the same BTS service region.

The switching network can be realized through switching net boards, switching net sheets, and the like. Also, the prior switching network in MSC may be used.

### 4. Proper voice channel switching manner is selected based on the determination result whether the calling MS and the called MS are located at the same BSC service region.

If the calling MS and the called MS are not located at the same BSC service region, the switching function of voice channels will be implemented according to the prior procedure, that is, the voice channel switching will be implemented by MSC.

In contrast, if the calling MS and the called MS are located at the same BSC service region, the BSC supporting the inner switching function will be informed to implement the voice channel switching function.

### 5. Complete mesh topology network transmission structure is supported at Abis interface.

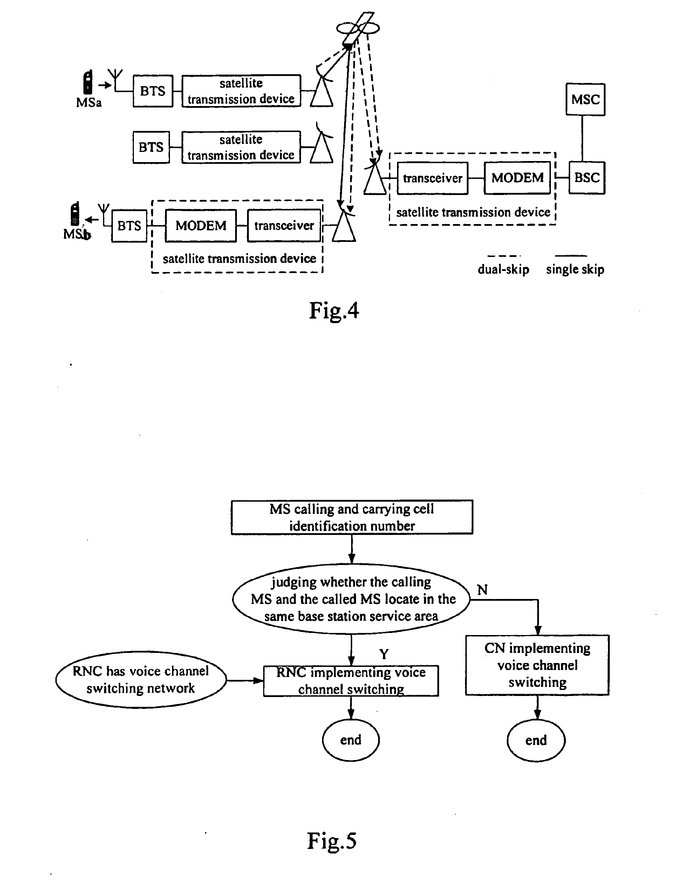

With reference to Figure 4, for the transmission systems supporting the mesh topology structure used at Abis interface between BTS and BSC, for example, complete mesh topology network of the satellite transmission, after the calling proceeding has been completed, a direct connection can be established between two BTSs where the calling MS and the called MS are located, bypassing the BSC, thereby the dual-skip mode is changed to the single skip mode.

The voice link from MSa to MSb requires to arrive and leave the satellite two times (dual skips) from MSa to BSC and from BSC to MSb before the change. After the change, it only requires to arrive and leave the satellite once (single skip) from MSa to MSb. In this way, one half of the transmission bandwidth has been saved. After the dual skips mode is changed to the single skip mode, not only the transmission links are saved, but also the transmission delay is reduced. The delay of the dual-skip mode of the satellite transmission is about 540ms, and it will be reduced one half for the single skip mode.

The BSC can support the mesh topology transmission structure at Abis interface. That is, when exactly knowing that the calling MS and the called MS are located at the present BSC during the calling procedure, the BSC informs the satellite transmission apparatus the information of BTSs where the calling MS and the called MS are located respectively. The switching from the star-like connection to the mesh topology connection can be performed by the satellite transmission apparatus to accomplish the direct connection of the voice channels.

In summary, the functions involved in the voice channel switching in the GSM system during the calling proceeding are as follows: the calling MS can send messages including the information of the cell identification number when initiating calling procedure; the MSC or the BSC can determine whether the current cell identification numbers of calling MS and the called MS belong to the same BSC; BSC involves switching network to implement the voice channel switching function; BSC supports the complete mesh topology transmission structure at Abis interface and can switch the dual-skip mode to the single skip mode.

Referring to Figure 5, when the above mobile communication system is a WCDMA system, the cell identification information of the calling MS is carried in the messages sent by the calling MS. Whether the calling MS and the called MS are located at the BTS service regions managed by the same BSC is determined by the Core Switching Network (CN) or Radio Network Controller (RNC).

## Claims

1. A method for implementing voice channel switching during calling proceeding in a mobile communication system, comprising the steps of:
adding a switching network in a base station controller (BSC);
initiating, by a calling mobile station (MSa), a call to a called mobile station (MSb)
authenticating, by the mobile communication system, the calling mobile station;
the method being **characterised by** comprising the further steps of:
obtaining a cell identification number table which is in the management station of the BSC listing Base Transceiver Stations (BTS), BTSs, managed by a same base station controller (BSC), and
judging whether both a first BTS corresponding to the calling mobile station (MSa) and a second BTS corresponding to the called mobile station (MSb) are managed by a same base station controller (BSC) according to the cell identification number table, a cell identification number of the called mobile station (MSb) and a cell identification number of the calling mobile station (MSa); and if both the first BTS and the second BTS are managed by the base station controller (BSC), implementing a voice channel connection through the switching network added in the base station controller (BSC); and
if the first BTS and the second BTS are managed by different base station controllers (BSC), implementing the voice channel connection through a mobile exchange,
wherein the mobile exchange manages the base station controllers (BSC).

2. The method of Claim 1, wherein said mobile communication system is a Global System for Mobile Communication, GSM" and the cell identification number of the calling mobile station is carried in a message sent by the calling mobile station (MSa),
and whether both the first BTS and the second BTS are managed by the base station controller (BSC) is judged by a Mobile Switching Center (MSC) or by the base station controller (BSC).

3. The method of Claim 2, wherein a transmission system supporting mesh topology structure is used as an interface between the BTSs and the base station controller (BSC) in said GSM system, and the base station controller (BSC) has a structure supporting said interface to employ complete mesh topology transmission.

4. The method of Claim 1, wherein said mobile communication system is a Wideband Code Division Multiple Access, WCDMA, system, and the cell identification number of the calling mobile station is carried in a message sent by the calling mobile station (MSa),
and whether both the first BTS and the second BTS are managed by the base station controller (BSC) is judged by the core switching network or the Radio Network Controller, RNC.

5. The method of Claim 1, wherein said mobile communication system is a GSM network and the cell identification number of the called mobile station is obtained from a Visit Location Register, VLR.

## Patentansprüche

1. Verfahren zum Implementieren von Sprachkanalvermittlung während des Anrufvorgangs in einem Mobilkommunikationssystem, mit den folgenden Schritten:
Hinzufügen eines Vermittlungsnetzes in einer Basisstationssteuerung (BSC);
Einleiten eines Anrufs einer angerufenen Mobilstation (MSb) durch eine anrufende Mobilstation (MSa);
Authentifizieren der anrufenden Mobilstation durch das Mobilkommunikationssystem;
wobei das Verfahren **dadurch gekennzeichnet, ist, dass** es ferner die folgenden Schritte umfasst:
Erhalten einer Zellenidentifikationsnummerntabelle, die sich in der Verwaltungsstation der BSC befindet und Basissender-/-empfängerstationen (BTS) bzw. BTS auflistet, die durch dieselbe Basisstationssteuerung (BSC) verwaltet werden, und
Beurteilen, ob sowohl eine der anrufenden Mobilstation (MSa) entsprechende erste BTS als auch eine der angerufenen Mobilstation (MSb) entsprechende zweite BTS durch dieselbe Basisstationssteuerung (BSC) verwaltet werden, gemäß der Zellenidentifikationsnummerntabelle, einer Zellenidentifikationsnummer der angerufenen Mobilstation (MSb) und einer Zellenidentifikationsnummer der anrufenden Mobilstation (MSa); und wenn sowohl die erste BTS als auch die zweite BTS durch die Basisstationssteuerung (BSC) verwaltet werden, Implementieren einer Sprachkanalverbindung durch das in der Basisstationssteuerung (BSC) hinzugefügte Vermittlungsnetz; und
wenn die erste BTS und die zweite BTS von verschiedenen Basisstationssteuerungen (BSC) verwaltet werden, Implementieren der Sprachkanalverbindung durch eine Mobilvermittlung,
wobei die Mobilvermittlung die Basisstationssteuerungen (BSC) verwaltet.

2. Verfahren nach Anspruch 1, wobei das Mobilkommunikationssystem ein Global System for Mobile Communication GSM ist und die Zellenidentifikationsnummer der anrufenden Mobilstation in einer durch die anrufende Mobilstation (MSa) gesendeten Nachricht geführt wird,
und wobei, ob sowohl die erste BTS als auch die zweite BTS durch die Basisstationssteuerung (BSC) verwaltet werden, durch eine Mobilvermittlungsstelle (MSC) oder durch die Basisstationssteuerung (BSC) beurteilt wird.

3. Verfahren nach Anspruch 2, wobei ein Mesh-Topologiestruktur unterstützendes Übertragungssystem als eine Schnittstelle zwischen den BTS und der Basisstationssteuerung (BSC) in dem GSM-System verwendet wird und die Basisstationssteuerung (BSC) eine die Schnittstelle unterstützende Struktur aufweist, um vollständige Mesh-Topologie-Übertragung zu verwenden.

4. Verfahren nach Anspruch 1, wobei das Mobilkommunikationssystem ein System mit Wideband Code Division Multiple Access WCDMA ist und die Zellenidentifikationsnummer der anrufenden Mobilstation in einer durch die anrufende Mobilstation (MSa) gesendeten Nachricht geführt wird,
und wobei, ob sowohl die erste BTS als auch die zweite BTS durch die Basisstationssteuerung (BSC) verwaltet werden, durch das Kernvermittlungsnetz oder die Funknetzsteuerung RNC beurteilt wird.

5. Verfahren nach Anspruch 1, wobei das Mobilkommunikationssystem ein GSM-Netz ist und die Zellenidentifikationsnummer der angerufenen Mobilstation aus einem Besucherregister VLR erhalten wird.

## Revendications

1. Procédé pour mettre en oeuvre une commutation de canaux vocaux lors de l'établissement d'appels dans un système de communication mobile, comprenant les étapes consistant à :
ajouter un réseau de commutation dans un contrôleur de station de base (BSC) ;
lancer, par une station mobile appelante (MSa), un appel vers une station mobile appelée (MSb) ;
authentifier, par le système de communication mobile, la station mobile appelante ;
le procédé étant **caractérisé en ce qu'**il comprend les étapes supplémentaires consistant à :
obtenir une table de numéros d'identification cellulaire qui est la station de gestion du BSC, dressant la liste des Stations Emettrices-Réceptrices de Base, BTS, gérées par un même contrôleur de station de base (BSC), et
évaluer si à la fois une première BTS correspondant à la station mobile appelante (MSa) et une seconde BTS correspondant à la station mobile appelée (MSb) sont gérées ou non par un même contrôleur de station de base (BSC) en fonction de la table de numéros d'identification cellulaire, d'un numéro d'identification cellulaire de la station mobile appelée (MSb) et d'un numéro d'identification cellulaire de la station mobile appelante (MSa) ; et si à la fois la première BTS et la seconde BTS sont gérées par le contrôleur de station de base (BSC), mettre en oeuvre une connexion de canal vocal par le biais du réseau de commutation ajouté dans le contrôleur de station de base (BSC) ; et
si la première BTS et la seconde BTS sont gérées par différents contrôleurs de station de base (BSC), mettre en oeuvre la connexion de canal vocal par le biais d'un central mobile,
dans lequel le central mobile gère les contrôleurs de station de base (BSC).

2. Procédé selon la revendication 1, dans lequel ledit système de communication mobile est un Système Global de Communication Mobile, GSM, et le numéro d'identification cellulaire de la station mobile appelante est acheminé dans un message envoyé par la station mobile appelante (MSa),
et l'évaluation si à la fois la première BTS et la seconde BTS sont gérées par le contrôleur de station de base (BSC) est effectuée par un Centre de Commutation de Services Mobiles (MSC) ou par le contrôleur de station de base (BSC).

3. Procédé selon la revendication 2, dans lequel un système de transmission supportant une structure à topologie maillée est utilisé comme interface entre les BTS et le contrôleur de station de base (BSC) dans ledit système GSM, et le contrôleur de station de base (BSC) a une structure supportant ladite interface pour employer une transmission à topologie maillée complète.

4. Procédé selon la revendication 1, dans lequel ledit système de communication mobile est un système à Accès Multiple par Différence de Code à Large Bande, WCDMA, et le numéro d'identification cellulaire de la station mobile appelante est acheminé dans un message envoyé par la station mobile appelante (MSa),
et l'évaluation si à la fois la première BTS et la seconde BTS sont gérées par le contrôleur de station de base (BSC) est effectuée par le réseau de commutation central ou le Contrôleur de Réseau Radio, RNC.

5. Procédé selon la revendication 1, dans lequel ledit système de communication mobile est un réseau GSM et le numéro d'identification cellulaire de la station mobile appelée est obtenu auprès d'un Enregistreur de Position Visitée, VLR.
